# EUROPÄISCHE PATENTANMELDUNG

(11) **EP 4 786 296 A1**
(43) Veröffentlichungstag der Anmeldung: **05.08.2026**
(21) Anmeldenummer: 26152823.6
(22) Anmeldetag: 20.01.2026
(51) Int. Cl.: B60W 30/18, B60R 21/01, B60R 22/46, B60W 50/16

(54) **VERFAHREN ZUM UNTERSTÜTZEN EINES FAHRERS EINES FAHRZEUGES**

(30) Priorität: 22.01.2025 DE 102025000251
(71) Anmelder: Mercedes-Benz Group AG, 70372 Stuttgart (DE)
(72) Erfinder: EPPINGER, Martin, 71126 Gäufelden (DE)
(74) Vertreter: Weller, Jürgen

(57) **Zusammenfassung**

Die Erfindung betrifft ein Verfahren zum Unterstützen eines Fahrers eines Fahrzeuges (1) im Fahrbetrieb des Fahrzeuges (1). Erfindungsgemäß ist vorgesehen, dass eine momentane Position des Fahrzeuges (1) auf einem Fahrstreckenabschnitt (F) ermittelt wird und ein zur Verringerung einer momentanen Fahrgeschwindigkeit in Abhängigkeit eines Verlaufes des Fahrstreckenabschnittes (F) ermittelter geeigneter Bremspunkt (B) zum Einleiten eines Bremsvorganges zum sicheren Durchfahren einer Kurve (K) des Fahrstreckenabschnittes (F) dem Fahrer mittels eines Gurtbandes eines durch den Fahrer angelegten Sicherheitsgurtes haptisch signalisiert wird.

## Beschreibung

Die Erfindung betrifft ein Verfahren zum Unterstützen eines Fahrers eines Fahrzeuges im Fahrbetrieb des Fahrzeuges.

Aus der DE 10 2004 030 997 A1 ist ein Fahrerassistenzsystem, das einen optimalen Kurvenverlauf berechnet und dem Fahrer Anweisungen zum Einhalten dieses Verlaufs gibt, bekannt. Die Offenbarung schließt die Ermittlung von optimalen Bremspunkten und die Ausgabe von haptischen Signalen, beispielsweise über das Bremspedal, mit ein.

Aus der DE 10 2016 216 986 A1 ist ein Verfahren zum Unterstützen eines Fahrers während einer Fahrt in einem Kraftfahrzeug bekannt. Das Kraftfahrzeug umfasst eine Rütteleinrichtung, die einer Komponente in unmittelbarer Nähe eines Fahrersitzes des Kraftfahrzeuges in einem Innenraum des Kraftfahrzeuges angeordnet ist. Dabei ist vorgesehen, dass der Fahrer die Komponente während der Fahrt berührt, bei dem zum Durchführen des Verfahrens für einen physikalischen Betriebsparameter des Kraftfahrzeuges bei der durchzuführenden Fahrt ein Richtwert vorgegeben wird, wobei Werte des einen physikalischen Betriebsparameters während der Fahrt sensorisch erfasst werden. Eine Abweichung eines jeweiligen sensorisch erfassten Wertes von dem mindestens einen Richtwert wird ermittelt, wobei abhängig von der Abweichung ein Maß einer Vibration der Rütteleinrichtung eingestellt wird.

Der Erfindung liegt die Aufgabe zugrunde, ein Verfahren zum Unterstützen eines Fahrers eines Fahrzeuges im Fahrbetrieb des Fahrzeuges anzugeben.

Die Aufgabe wird erfindungsgemäß gelöst durch ein Verfahren, welches die in Anspruch 1 angegebenen Merkmale aufweist.

Vorteilhafte Ausgestaltungen der Erfindung sind Gegenstand der Unteransprüche.

Ein Verfahren zum Unterstützen eines Fahrers eines Fahrzeuges im Fahrbetrieb des Fahrzeuges sieht erfindungsgemäß vor, dass eine momentane Position des Fahrzeuges auf einem Fahrstreckenabschnitt ermittelt wird und ein zur Verringerung einer momentanen Fahrgeschwindigkeit in Abhängigkeit eines Verlaufes des Fahrstreckenabschnittes ermittelter geeigneter Bremspunkt zum Einleiten eines Bremsvorganges zum sicheren Durchfahren einer Kurve des Fahrstreckenabschnittes dem Fahrer mittels eines Gurtbandes eines durch den Fahrer angelegten Sicherheitsgurtes haptisch signalisiert wird.

Durch Anwendung des Verfahrens können eine Fahrsicherheit und eine Verkehrssicherheit erhöht werden, da der Fahrer des Fahrzeuges haptisch darauf hingewiesen wird, an welchem Punkt auf dem Fahrstreckenabschnitt der Bremsvorgang eingeleitet werden soll, um die Kurve sicher zu durchfahren.

In einer Ausführung erfolgt die haptische Signalisierung mittels einer Vibration des Gurtbandes. Da das Gurtband bei angelegtem Sicherheitsgurt am Körper des Insassen anliegt, nimmt der Insasse die Vibration wahr und kann sich mental in Bezug auf die Einleitung des Bremsvorganges vorbereiten, um die Kurve sicher zu durchfahren.

In einer weiteren Ausführung des Verfahrens wird eine Intensität der Vibration in Abhängigkeit einer Entfernung des Fahrzeuges zu dem ermittelten geeigneten Bremspunkt automatisiert erhöht. Das heißt, dass durch die stärker werdende Vibration des Gurtbandes angekündigt wird, dass der geeignete Bremspunkt dem Fahrzeug unmittelbar vorausliegt. Der Fahrer kann seinen Fuß vom Fahrpedal nehmen, gegebenenfalls eine Lenkung betätigen und den Bremsvorgang zum richtigen Zeitpunkt, also bei Erreichen des geeigneten Bremspunktes, einleiten.

In einer weiteren möglichen Ausführung wird der geeignete Bremspunkt zum Einleiten des Bremsvorganges in Abhängigkeit von der ermittelten momentanen Position des Fahrzeuges und/oder einer momentanen Fahrgeschwindigkeit des Fahrzeuges und/oder vorherrschender Witterungsbedingungen und/oder erfasster Objekte in einer Umgebung des Fahrzeuges ermittelt. Es werden vergleichsweise viele Parameter bei der Ermittlung des geeigneten Bremspunktes berücksichtigt, so dass davon ausgegangen werden kann, dass wenn der Bremsvorgang zu dem ermittelten geeigneten Bremspunkt eingeleitet wird, die Kurve sicher durchfahren werden kann.

Eine Ausführung des Verfahrens sieht vor, dass die Vibration des Gurtbandes mittels Ansteuerung eines elektromotorischen Gurtstraffers des Sicherheitsgurtes erzeugt wird. Somit ist es nicht erforderlich, konstruktionsbedingte Änderungen an dem Sicherheitsgurt vorzunehmen, um die haptische Signalisierung in Bezug auf die erforderliche Einleitung des Bremsvorganges zum sicheren Durchfahren der Kurve des Fahrstreckenabschnittes zu erzeugen.

In einer weiteren möglichen Ausführung erfolgt die haptische Signalisierung in Bezug auf den geeigneten Bremspunkt automatisiert, wenn anhand der ermittelten momentanen Position des Fahrzeuges ermittelt wird, dass sich das Fahrzeug auf einer Rennstrecke befindet. Somit wird der Fahrer des Fahrzeuges unterstützt, insbesondere wenn das Fahrzeug mit vergleichsweise hoher momentaner Fahrgeschwindigkeit fährt und/oder der Fahrer die Rennstrecke noch nicht kennt. Der Fahrer wird mittels der haptischen Signalisierung auf den geeigneten Bremspunkt hingewiesen, um die Kurve sicher und optimal zu durchfahren. Das Verfahren dient insbesondere zur Emotionalisierung eines Fahrerlebnisses für den Fahrer auf der Rennstrecke, so dass ein vergleichsweise sicherer Fahrbetrieb des Fahrzeuges auf der Rennstrecke realisiert werden kann. Ein Risiko für einen selbstverschuldeten Unfall, insbesondere aufgrund eines Einfahrens in eine Kurve mit überhöhter Fahrgeschwindigkeit, kann durch Anwendung des Verfahrens erheblich verringert werden. Beispielsweise ist es mittels des Verfahrens für einen Hobbyrennfahrer möglich, Rundenzeiten auf der Rennstrecke zu optimieren. Darüber hinaus kann der Fahrer des Fahrzeuges bei Anwendung des Verfahrens einen Verlauf der Rennstrecke im Vergleich schneller lernen.

In einer Ausführung erfolgt die haptische Signalisierung in Bezug auf den geeigneten Bremspunkt automatisiert, wenn ein Rennstreckenmodus des Fahrzeuges aktiviert ist. Somit ist es auch möglich, dass der Fahrer im Fahrbetrieb des Fahrzeuges auf einer öffentlichen Straße unterstützt wird, wenn der Rennstreckenmodus aktiviert ist. Dabei wird der geeignete Bremspunkt zum Einleiten eines Bremsvorganges mittels Vibration des Gurtbandes haptisch signalisiert, insbesondere um die Kurve sicher und ohne Gefährdung weiterer Verkehrsteilnehmer zu durchfahren.

In einer weiteren Ausführung wird die momentane Position des Fahrzeuges auf dem Fahrstreckenabschnitt satellitengestützt ermittelt, so dass die momentane Position des Fahrzeuges auf dem Fahrstreckenabschnitt vergleichsweise genau ermittelt wird. Beispielsweise können hierzu zusätzlich auch Kartendaten einer fahrzeugseitig vorhandenen digitalen Straßenkarte berücksichtigt werden.

Ausführungsbeispiele der Erfindung werden im Folgenden anhand einer Zeichnung näher erläutert.

Dabei zeigt:

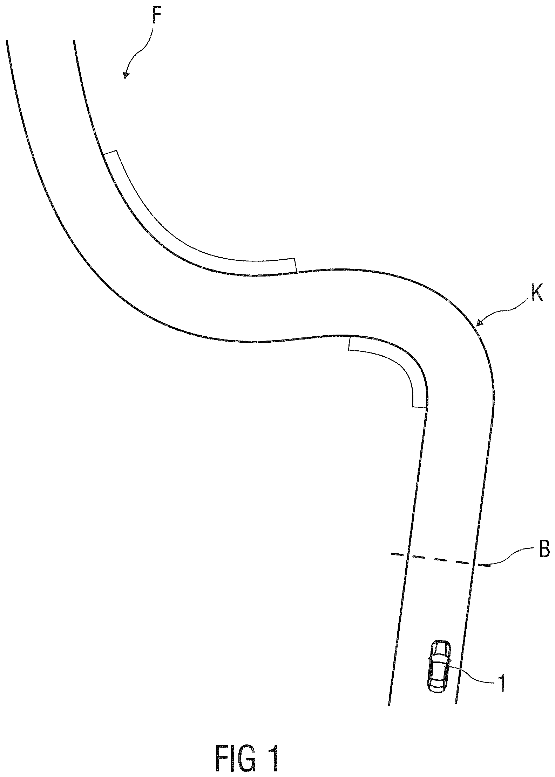

- Fig. 1: schematisch einen Fahrstreckenabschnitt mit einer Kurve, auf die ein Fahrzeug zufährt.

Die einzige Figur zeigt einen Fahrstreckenabschnitt F einer Rennstrecke mit einem Fahrzeug 1, das auf ein Kurve K zufährt.

Im Allgemeinen ist bekannt, dass eine Rennstrecke von Privatpersonen mit ihrem eigenen Fahrzeug 1 befahren werden können. Für einen solchen Rennstreckenbetrieb gibt es unterschiedliche Assistenzfunktionen, zum Beispiel zum Aufzeichnen von Rundenzeiten, zur Dokumentation von Beschleunigungen etc. und/oder welche einen optimalen Schaltzeitpunkt für ein Getriebe anzeigen. Wenn ein Fahrer eines Fahrzeuges 1, beispielsweise ein Hobbyrennfahrer, auf einer Rennstrecke mit einer hohen Fahrgeschwindigkeit auf eine Kurve K zufährt und/oder einen Verlauf der Rennstrecke nicht kennt, kann es passieren, dass der Fahrer des Fahrzeuges 1 einen geeigneten Bremspunkt zum sicheren, insbesondere zum optimalen, Durchfahren der Kurve K verpasst.

Im Folgenden wird ein Verfahren zum Unterstützen eines Fahrers eines Fahrzeuges 1 im Fahrbetrieb des Fahrzeuges 1, insbesondere auf einem Fahrstreckenabschnitt F einer Rennstrecke, beschrieben. Das Verfahren sieht vor, einen mittels gestrichelter Linie dargestellten, beispielhaft ermittelten geeigneten Bremspunkt B zum Einleiten eines Bremsvorganges zum sicheren Durchfahren einer Kurve K des Fahrstreckenabschnittes F dem Fahrer mittels eines Gurtbandes eines durch den Fahrer angelegten Sicherheitsgurtes haptisch signalisiert wird.

In einer Ausführungsform wird der ermittelte geeignete Bremspunkt B durch Vibration des Gurtbandes des angelegten Sicherheitsgurtes haptisch signalisiert, wenn anhand einer erfassten momentanen Position des Fahrzeuges 1 ermittelt wird, dass sich das Fahrzeug 1 auf einer Rennstrecke befindet.

Alternativ oder zusätzlich wird der ermittelte geeignete Bremspunkt B haptisch signalisiert, wenn ein Rennstreckenmodus des Fahrzeuges 1 aktiviert ist.

Insbesondere wird die momentane Position des Fahrzeuges 1 satellitengestützt ermittelt, wobei fahrzeugseitig vorliegende Kartendaten einer digitalen Straßenkarte mit berücksichtigt werden.

Der geeignete Bremspunktes B zum Einleiten eines Bremsvorganges zum sicheren Durchfahren der dem Fahrzeug 1 auf dem Fahrstreckenabschnitt F vorausliegenden Kurve K wird in Abhängigkeit von der ermittelten momentanen Position des Fahrzeuges 1 und einer momentanen Fahrgeschwindigkeit des Fahrzeuges und vorherrschender Witterungsbedingungen und erfasster Objekte in einer Umgebung des Fahrzeuges sowie in Abhängigkeit einer Oberflächenbeschaffenheit des Fahrstreckenabschnittes F etc. ermittelt.

Die haptische Signalisierung, das heißt die Vibration des Gurtbandes erfolgt mittels Ansteuerung eines elektromotorischen Gurtstraffers des Sicherheitsgurtes, wobei eine Intensität der Vibration in Abhängigkeit einer Entfernung des Fahrzeuges 1 zu dem ermittelten geeigneten Bremspunkt B automatisiert erhöht wird. Dazu ist vorgesehen, dass die Intensität bei Verringerung der Entfernung zu dem ermittelten geeigneten Bremspunkt B erhöht wird. Beispielsweise wird die Vibration derart intensiviert, je näher sich das Fahrzeug 1 zu dem ermittelten geeigneten Bremspunkt B befindet. Somit kann der Fahrer seinen Fuß vom Fahrpedal des Fahrzeuges 1 nehmen, gegebenenfalls eine Lenkung betätigen und den Bremsvorgang zum richtigen Zeitpunkt, also bei Erreichen des geeigneten Bremspunktes B, einleiten, um die Kurve K optimal und insbesondere sicher zu durchfahren.

Fährt das Fahrzeug 1 mit einer vergleichsweise geringen momentanen Fahrgeschwindigkeit auf die Kurve K zu, wobei anhand ermittelter Fahrdynamikdaten und/oder weiterer Bedingungen, insbesondere zur Ermittlung des geeigneten Bremspunktes B, festgestellt wird, dass ein Bremsvorgang zum sicheren Durchfahren der Kurve K nicht erforderlich ist, erfolgt keine haptische Signalisierung durch Vibration des Gurtbandes in Bezug auf einen geeigneten Bremspunkt B.

Durch Anwendung des Verfahrens kann insbesondere, wenn das Fahrzeug 1 zu schnell auf eine Kurve K zufährt, die Vibration des Gurtbandes frühzeitiger erfolgen, wodurch der Fahrer des Fahrzeuges 1 darauf hingewiesen wird, dass ein Bremsvorgang erforderlich ist, um die Kurve K sicher zu durchfahren und das Fahrzeug 1 nicht durch wirkende Fliehkräfte aus der Kurve K herausgeschleudert wird.

## Patentansprüche

1. Verfahren zum Unterstützen eines Fahrers eines Fahrzeuges (1) im Fahrbetrieb des Fahrzeuges (1),
**dadurch gekennzeichnet, dass** eine momentane Position des Fahrzeuges (1) auf einem Fahrstreckenabschnitt (F) ermittelt wird und ein zur Verringerung einer momentanen Fahrgeschwindigkeit in Abhängigkeit eines Verlaufes des Fahrstreckenabschnittes (F) ermittelter geeigneter Bremspunkt (B) zum Einleiten eines Bremsvorganges zum sicheren Durchfahren einer Kurve (K) des Fahrstreckenabschnittes (F) dem Fahrer mittels eines Gurtbandes eines durch den Fahrer angelegten Sicherheitsgurtes haptisch signalisiert wird, wobei die haptische Signalisierung mittels einer Vibration des Gurtbandes erfolgt und eine Intensität der Vibration in Abhängigkeit einer Entfernung des Fahrzeuges (1) zu dem ermittelten geeigneten Bremspunkt (B) automatisiert erhöht wird.

2. Verfahren nach einem der vorhergehenden Ansprüche,
**dadurch gekennzeichnet, dass** der geeignete Bremspunkt (B) zum Einleiten des Bremsvorganges in Abhängigkeit von der ermittelten momentanen Position des Fahrzeuges (1) und/oder einer momentanen Fahrgeschwindigkeit des Fahrzeuges (1) und/oder vorherrschender Witterungsbedingungen und/oder erfasster Objekte in einer Umgebung des Fahrzeuges (1) ermittelt wird.

3. Verfahren nach einem der Ansprüche 1 bis 2,
**dadurch gekennzeichnet, dass** die Vibration des Gurtbandes mittels Ansteuerung eines elektromotorischen Gurtstraffers des Sicherheitsgurtes erzeugt wird.

4. Verfahren nach einem der vorhergehenden Ansprüche,
**dadurch gekennzeichnet, dass** die haptische Signalisierung in Bezug auf den geeigneten Bremspunkt (B) automatisiert erfolgt, wenn anhand der ermittelten momentanen Position des Fahrzeuges (1) ermittelt wird, dass sich das Fahrzeug (1) auf einer Rennstrecke befindet.

5. Verfahren nach einem der vorhergehenden Ansprüche,
**dadurch gekennzeichnet, dass** die haptische Signalisierung in Bezug auf den geeigneten Bremspunkt (B) automatisiert erfolgt, wenn ein Rennstreckenmodus des Fahrzeuges (1) aktiviert ist.

6. Verfahren nach einem der vorhergehenden Ansprüche,
**dadurch gekennzeichnet**, die momentane Position des Fahrzeuges (1) auf dem Fahrstreckenabschnitt (F) satellitengestützt ermittelt wird.
